# EUROPÄISCHE PATENTSCHRIFT

(11) **EP 4 314 454 B1**
(45) Veröffentlichungstag und Bekanntmachung des Hinweises auf die Patenterteilung: **04.12.2024**
(21) Anmeldenummer: 22711466.7
(22) Anmeldetag: 09.03.2022
(51) Int. Cl.: E05B 81/64

(54) **VERFAHREN ZUM BETRIEB EINER KRAFTFAHRZEUGTÜR**
METHOD FOR OPERATING A MOTOR VEHICLE DOOR
PROCÉDÉ DE FONCTIONNEMENT DE PORTIÈRE DE VÉHICULE AUTOMOBILE

(30) Priorität: 22.03.2021 DE 102021106976
(43) Veröffentlichungstag der Anmeldung: 07.02.2024
(73) Patentinhaber: Kiekert Aktiengesellschaft, 42579 Heiligenhaus (DE)
(72) Erfinder: NÖVERMANN, Ingo, 45470 Mülheim an der Ruhr (DE); GUNTRUM, Nils Sören, 53340 Meckenheim (DE); WOLF, Christian, 50829 Köln (DE)
(74) Vertreter: Kiekert AG Patentabteilung
(86) Internationale Anmeldenummer: PCT/DE2022/100188
(87) Internationale Veröffentlichungsnummer: WO 2022/199749

(56) Entgegenhaltungen:
- WO-A1-2018/002158
- WO-A1-2020/084068
- DE-A1- 102011 121 411
- DE-A1- 102012 200 267
- DE-B4- 102006 030 986
- FR-A1- 3 102 502

## Beschreibung

Die Erfindung betrifft ein Verfahren zum Betrieb einer Kraftfahrzeug-Tür, wonach die Kraftfahrzeug-Tür beispielsweise mit einem Aktuator und/oder einem Kraftfahrzeug-Türschloss als Stromverbraucher sowie wenigstens einem Sensor zur Erfassung von Türbewegungen ausgerüstet ist, und wonach eine Signale des Sensors auswertende Steuereinheit je nach registrierten Türbewegungen von einem Ruhemodus in einem Betriebszustand und zurück überführt wird.

Die Steuereinheit ist dabei zumindest in der Lage, die Signale des Sensors auswerten zu können. In der Regel dient die Steuereinheit zusätzlich noch dazu, den Aktuator und/oder das Kraftfahrzeug-Türschloss zu überwachen und gegebenenfalls anzusteuern. Der Begriff Kraftfahrzeug-Tür ist vorliegend weit auszulegen und umfasst sämtliche gegenüber einer Karossrie bewegbaren Klappen, Deckel, Türen usw., und zwar sowohl im Innern als auch Außen.

Ein solches Verfahren wird im Rahmen der DE 10 2006 058 723 A1 beschrieben. Tatsächlich geht es an dieser Stelle darum, einen schlüssellosen Zugang zu einer Fahrzeugtür zu realisieren. Dabei wird insgesamt mit einem Näherungssensor gearbeitet, mit dessen Hilfe ein Tür-Steuergerät von einem ersten Betriebszustand in einen zweiten Betriebszustand überführt werden kann. Bei den beiden Betriebszuständen handelt es sich einerseits um einen Ruhemodus und andererseits einen Betriebszustand.

Neben solchen Näherungssensoren wie beim zuvor beschriebenen gattungsgemäßen Stand der Technik entsprechend der DE 10 2006 058 723 A1 sind in diesem Kontext auch grundsätzlich Beschleunigungssensoren bekannt. Beispielhaft hierfür sei die DE 10 2006 030 986 B4 genannt. Hier wird eine Vorrichtung und ein Verfahren zur Steuerung einer Fahrzeugklappe beschrieben. Mithilfe des Beschleunigungssensors kann die Beschleunigung der Fahrzeugklappe bzw. Fahrzeugtür erfasst werden.

Vergleichbar geht die DE 10 2007 062 472 B4 vor. An dieser Stelle geht es um eine Vorrichtung zur Anpassung einer Stellkraft eines Aktuators zur Unterstützung einer Öffnung- und/oder Schließbewegung. Mithilfe einer Auswerteeinrichtung erfolgt nun die Anpassung der Stellkraft des Aktuators an die jeweilige Bediensituation der Tür. Dazu ist unter anderem ein in der Nähe des Türgriffes angeordneter Beschleunigungssensor vorgesehen.

Die WO 2018/002158 A1 offenbart ein Verfahren zum Betrieb einer Kraftfahrzeug-Tür, wonach die Kraftfahrzeug-Tür beispielsweise mit einem Aktuator als Stromverbraucher sowie wenigstens einem Sensor zur Erfassung von Türbewegungen ausgerüstet ist, und wonach eine Signale des Sensors auswertende Steuereinheit je nach registrierten Türbewegungen von einem Ruhemodus in einem Betriebszustand und zurück überführt wird.

Der Stand der Technik hat sich grundsätzlich bewährt, wenn es darum geht, mithilfe eines Sensors in oder an der zugehörigen Kraftfahrzeug-Tür eine Steuereinheit von einen Ruhemodus in einen Betriebszustand und zurück zu überführen. Die korrekte Funktionsweise setzt jedoch voraus, dass der Sensor selbst und auch die Steuereinheit grundsätzlich bestromt werden. In Anbetracht der zahlreichen elektrischen Verbraucher bzw. Stromverbraucher in einem Kraftfahrzeug besteht ein generelles Bedürfnis dahingehend, insbesondere den Ruhestrom bzw. den Stromverbrauch im Ruhemodus zu reduzieren. An dieser Stelle sind nach wie vor Verbesserungen möglich.

Der Erfindung liegt das technische Problem zugrunde, ein derartiges Verfahren zum Betrieb einer Kraftfahrzeug-Tür so weiterzuentwickeln, dass der Stromverbrauch insbesondere im Ruhemodus gegenüber bisherigen Vorgehensweisen noch einmal vermindert ist.

Zur Lösung dieser technischen Problemstellung schlägt die Erfindung bei einem gattungsgemäßen Verfahren zum Betrieb einer Kraftfahrzeug-Tür vor, dass der im Ruhemodus stromlose Sensor durch die Türbewegung einen Stromimpuls erzeugt.

Dabei wird grundsätzlich so vorgegangen, dass mithilfe des vorgenannten Stromimpulses die Steuereinheit aufgeweckt wird und vom Ruhemodus in den Betriebszustand übergeht. Im Ruhemodus ist die Steuereinheit ferner und in der Regel ebenfalls stromlos geschaltet. D. h., der Ruhemodus ist im Rahmen der Erfindung dadurch gekennzeichnet, dass sowohl der Sensor als auch die den Sensor auswertende Steuereinheit jeweils stromlos sind, also keinen Ruhestrom verbrauchen. Vergleichbares gilt für den Stromverbraucher.

Erst wenn eine Türbewegung stattfindet, erzeugt der Sensor selbst einen Stromimpuls. Dieser Stromimpuls des Sensors wird genutzt, um die Steuereinheit aufzuwecken bzw. von Ihrem stromlosen Ruhemodus in den Betriebszustand zu überführen.

Zu diesem Zweck geht die Erfindung regelmäßig so vor, dass der vom Sensor durch die Türbewegung erzeugte Stromimpuls eine der Steuereinheit zugeordnete Stromversorgungseinheit aktiviert. Die Stromversorgungseinheit wird also mithilfe des vom Sensor erzeugten Stromimpulses überhaupt erst eingeschaltet bzw. von ihrem im Ruhemodus eingenommenen und ebenfalls stromlosen Zustand in den aktiven Zustand überführt. Sobald die Stromversorgungseinheit aktiviert ist, wird mit ihrer Hilfe die Steuereinheit bestromt und kann dann vom zuvor eingenommenen stromlosen Ruhemodus in den Betriebszustand übergehen. D. h., die aktivierte Stromversorgungseinheit überführt die Steuereinheit vom Ruhemodus in den Betriebszustand.

Auf diese Weise wird der erfindungsgemäß benötigte Ruhestrom gegenüber bisherigen Vorgehensweise noch einmal deutlich reduziert. Denn im Ruhemodus sind sowohl die Steuereinheit als auch der Sensor und die die Steuereinheit mit elektrischer Energie versorgende Stromversorgungseinheit jeweils stromlos geschaltet. Ebenso der oder die Stromverbraucher. Erst dann, wenn eine Türbewegung stattfindet, sorgt diese über den Sensor dafür, dass der Stromimpuls erzeugt wird. Der vom Sensor produzierte Stromimpuls aktiviert die Stromversorgungseinheit, die wiederum die Steuereinheit mit der erforderlichen elektrischen Energie versorgt, damit diese von ihrem Ruhemodus in den Betriebszustand überführt werden kann. Ein derartiges und in dieser Konsequenz beobachtetes Energiemanagement ist bisher nicht für möglich gehalten worden.

Dabei übernimmt der Sensor eine Kernfunktion der gestalt, dass mit seiner Hilfe nicht nur die Bewegungen der Kraftfahrtzeug-Tür im Betriebszustand erfasst werden können. Sondern der Sensor sorgt generell auch dafür, dass ausgehend vom Ruhemodus der durch seine Bewegung erzeugte Stromimpuls die Stromversorgungseinheit aktiviert, die dann ihrerseits die Steuereinheit in dem Betriebszustand überführt. Gleiches gilt dann auch für den Sensor. Hierin sind die wesentlichen Vorteile zu sehen.

Nach vorteilhafter Ausgestaltung handelt es sich bei dem Sensor um einen induktiv arbeitenden Beschleunigungssensor bzw. einen solchen Sensor, der bei seiner Bewegung durch die Bewegung induzierten elektrischen Strom erzeugt. Das kann im Einzelnen und vorteilhaft so realisiert und umgesetzt werden, dass der Sensor im einfachsten Fall mit einer oder mehreren Spulen sowie einem oder mehreren demgegenüber bewegbaren Permanentmagneten ausgerüstet ist. Dabei wird man vorteilhaft den Permanentmagneten so anordnen und ausrichten, dass er bei einer Bewegung der betreffenden Kraftfahrzeug-Tür gegenüber der bzw. den demgegenüber ortsfesten Spulen eine Bewegung vollführt und hierdurch in den Spulen Strom induziert wird. Der auf diese Weise induzierte Strom sorgt nun für den Stromimpuls, der erfindungsgemäß genutzt wird, um die Stromversorgungseinheit zu aktivieren, die dann ihrerseits die Steuereinheit vom Ruhemodus in dem Betriebszustand überführt. Grundsätzlich kann der Sensor aber auch mit einer entsprechend arbeitenden Induktionseinheit ausgerüstet werden.

Zu diesem Zweck kann die zuvor beschriebene und dem Sensor zugeordnete Induktionseinheit beispielsweise in Linearrichtung arbeiten. D. h., in diesem Fall bewegt sich der beispielsweise stabförmige Permanentmagnet linear gegenüber der einen oder den mehreren ortsfesten Spulen. Es ist grundsätzlich aber auch möglich, dass die Induktioneinheit rotativ arbeitet. In diesem Fall können ein oder mehrere Spulen kreisförmig angeordnet sein. Sobald diese Kreisanordnung gegenüber einem ortsfesten Permanentmagneten rotiert, führt dies erneut zu einer Induktion von elektrischem Strom in den Spulen, die für den zuvor bereits angesprochenen Stromimpuls genutzt werden kann.

Die linear oder rotativ arbeitete Induktionseinheit kann nun erfindungsgemäß nicht nur zur Erzeugung des Stromimpulses als Aufwachimpuls genutzt werden. Sondern grundsätzlich kann die linear oder rotativ arbeitende Induktionseinheit auch als Sensor originär herangezogen werden. Denn die Beschleunigung des linear gegenüber den Spulen bewegten Permanentmagneten und das hiermit verbundene induzierte Stromsignal stellt ebenso ein Maß für die Beschleunigung dar wie die Rotationsgeschwindigkeit im Falle der rotativ arbeitenden Induktionseinheit. D. h., in diesem Fall ist der Sensor selbst als induktiv arbeitender Beschleunigungssensor ausgebildet. Grundsätzlich kann die Induktionseinheit aber auch mit einem weiteren und beispielsweise auf Halbleiterbasis oder als Hallsensor ausgebildeten Sensor kombiniert werden. D. h., der Sensor kann generell als induktiv arbeitender Beschleunigungssensor ausgebildet sein und/oder eine Induktionseinheit beinhalten.

In der Regel ist der Sensor mit der Stromversorgungseinheit über eine Kommunikationsverbindung gekoppelt. Die Kommunikationsverbindung kann grundsätzlich drahtlos oder drahtgebunden arbeiten. Dabei ist die Auslegung meistens so getroffen, dass im Ruhemodus lediglich die Kommunikationsverbindung aktiv ist. Demgegenüber sind der Sensor, die Stromversorgungseinheit, die Steuereinheit und in der Regel auch sämtliche von der Steuereinheit angesteuerte Stromverbraucher stromlos. Hierzu gehören beispielhaft der zuvor bereits angesprochene Aktuator und/oder das Kraftfahrzeug-Türschloss. Auf diese Weise wird beispielsweise ein die Kraftfahrzeug-Tür bewegender oder die Bewegung unterstützender Aktuator im Ruhemodus stromlos geschaltet. Das gilt auch und insbesondere für den Fall, dass die Kraftfahrtzeug-Tür geöffnet ist und sich in Ruhe befindet. Erst dann, wenn die Steuereinheit mithilfe des vom Sensor erzeugten Stromimpulses vom Ruhemodus in den Betriebszustand überführt wird, sorgt die Steuereinheit in Verbindung mit der aktivierten Stromversorgungseinheit insgesamt dafür, dass dann der Aktuator die Bewegung der Kraftfahrtzeug-Tür wunschgemäß unterstützen kann. Das gilt selbstverständlich nur beispielhaft.

In der Regel sind die Steuereinheit und der Sensor in einem Türflügel der Kraftfahrzeug-Tür angeordnet. Demgegenüber findet sich die Stromversorgungseinheit meistens karosserieseitig. Im Ergebnis wird ein gegenüber bisherigen Ausführungsformen deutlich reduzierter elektrischer Stromverbrauch insbesondere im Ruhemodus beobachtet. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1A-1C: das erfindungsgemäße Verfahren bzw. eine nach dem Verfahren betriebene Kraftfahrzeug-Tür schematisch und
- Fig. 2: die Kraftfahrzeugtür und den Sensor im Detail sowie
- Fig. 3: das Sensorsignal über der Zeit schematisch.

In den Figuren ist eine Kraftfahrzeugtür 1 dargestellt, die sich mit ihrem Türflügel 2 von einer strichpunktiert angedeuteten geschlossenen Position in eine durchgezogen dargestellte Öffnungsposition um eine Achse 3 verschwenken lässt. Bei der Kraftfahrzeug-Tür 1 handelt es sich im Ausführungsbeispiel um eine Kraftfahrzeug-Seitentür, eine Kraftfahrzeug-Klappe, eine Tankklappe etc. D. h., der Begriff Kraftfahrzeug-Tür 1 ist weit auszulegen und erfasst letztlich sämtliche gegenüber einer Karosserie bewegbaren Klappen, Verschlüsse etc. Hierzu können auch im Innern der Kraftfahrzeugkarosserie befindliche Klappen wie beispielsweise eine Handschuhklappe gehören. Ebenso sind unter den Begriff Kraftfahrzeug-Tür 1 sowohl rotativ als auch schiebend oder anderweitig bewegbare KraftfahrzeugTüren, Kraftfahrzeug-Klappen, Kraftfahrzeug-Deckel usw. zu verstehen.

Im Rahmen der Erfindung wird nun so vorgegangen, dass die fragliche Kraftfahrtzeug-Tür 1 mit einem Aktuator 4 ausgerüstet ist. Der Aktuator 4 mag an oder im Bereich der Achse bzw. Drehachse 3 angreifen und sorgt dafür, dass mit seiner Hilfe der Türflügel 2 geöffnet oder geschlossen werden kann bzw. eine von einem Benutzer initiierte Schwenkbewegung des Türflügel 2 unterstützt wird. Bei dem Aktuator 4 handelt es sich folglich um einen Stromverbraucher.

Zum grundsätzlichen Aufbau gehört darüber hinaus noch ein Sensor 5 in Verbindung mit einer Steuereinheit 6. Man erkennt, dass die Steuereinheit 6 und der Sensor 5 im Türflügel 2 der Kraftfahrzeug-Tür 1 angeordnet sind. Das ist selbstverständlich nicht zwingend und es kommt im Rahmen der Erfindung lediglich darauf an, dass mithilfe des Sensors 5 Türbewegungen der Kraftfahrzeug-Tür 1 bzw. des Türflügels 2 erfasst werden können. Dazu lassen sich Signale des Sensors 5 mithilfe der Steuereinheit 6 je nach den registrierten Türbewegungen erfassen.

Die Steuereinheit 6 kann nun von einem Ruhemodus in einem Betriebszustand und zurück überführt werden. Dabei ist der Ruhemodus der Steuereinheit 6 dadurch gekennzeichnet, dass nicht nur die Steuereinheit 6 sondern auch der mithilfe der Steuereinheit 6 beaufschlagte Aktuator 4 stromlos geschaltet sind. Ebenso der Sensor 5. Um nun die Steuereinheit 6 von dem Ruhemodus in den Betriebszustand zu überführen und damit sicherzustellen, dass der Aktuator 4 mithilfe der Steuereinheit 6 angesteuert wird und die Bewegung des Türflügel 2 wie beschrieben unterstützen kann, sorgt nun erfindungsgemäß der im Ruhemodus ebenfalls stromlose Sensor 5 durch die Türbewegung dafür, dass ein Stromimpuls erzeugt wird.

Mithilfe des Stromimpulses wird die Steuereinheit 5 aufgeweckt und vom Ruhemodus in den Betriebszustand überführt. Dazu geht die Erfindung im Detail so vor, dass der Sensor 5 nach dem Ausführungsbeispiel als induktiv arbeitender Beschleunigungssensor ausgebildet ist und eine Induktionseinheit 5 aufweist. Nach dem Ausführungsbeispiel sind der Sensor 5 und die Induktionseinheit 5 synonym bzw. fallen zusammen. Es ist grundsätzlich aber auch möglich, dass der Sensor 5 die Induktionseinheit 5 beinhaltet bzw. aufweist und zusätzlich mit einem Sensorelement in Gestalt eines Halbleitersensors, eines Hallsensors etc. ausgerüstet ist, um mit deren Hilfe die Türbewegungen der Kraftfahrzeug-Tür 1 erfassen zu können. Das ist jedoch nicht dargestellt.

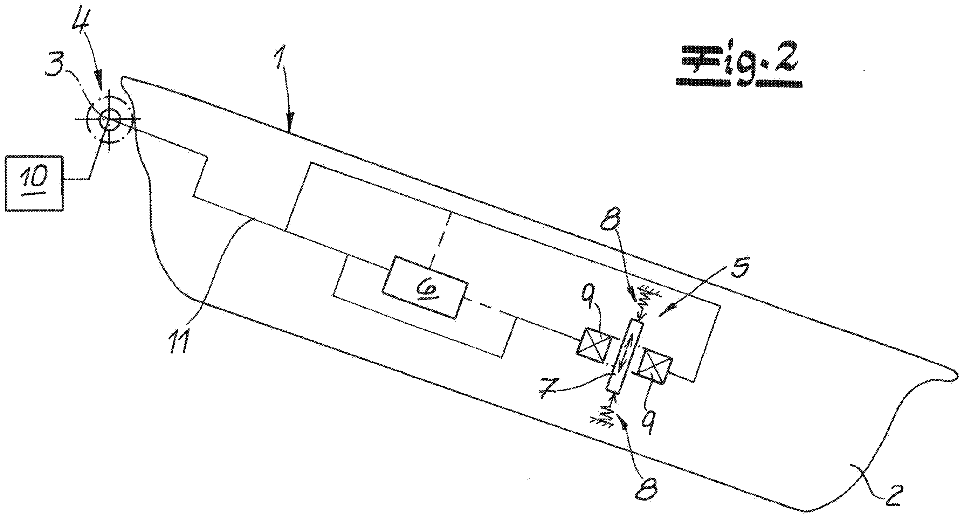

Die Induktionseinheit 5 bzw. der Sensor 5 nach dem Ausführungsbeispiel arbeitet nun so, dass ausweislich der Figur 2 die Induktionseinheit 5 mit einem linear in der in der Figur 2 angedeuteten Pfeilrichtung hin und her bewegbaren Permanentmagneten 7 ausgerüstet ist. Dieser Permanentmagnet 7 bewegt sich gegenüber zwei ortsfesten Spulen 9. Dabei ist der Permanentmagnet 7 nicht nur im Innern der Spulen 9 gehalten und wird hierin geführt, sondern sorgen ein oder beidseitig vorgesehene Federn 8 dafür, dass der Permanentmagnet 7 bei seiner Linearbewegung nicht beschädigt wird, sondern vielmehr jeweils endseitig eine elastische Abbremsung erfährt.

Die beiden Spulen 9 sind jeweils mit der Steuereinheit 6 verbunden. Anstelle der in der Figur 2 dargestellten und linear arbeitenden Induktionseinheit 5 kann alternativ oder zusätzlich auch eine in der Beschreibungseinleitung bereits erläuterte rotativ arbeitende Induktionseinheit 5 zur Anwendung kommen.

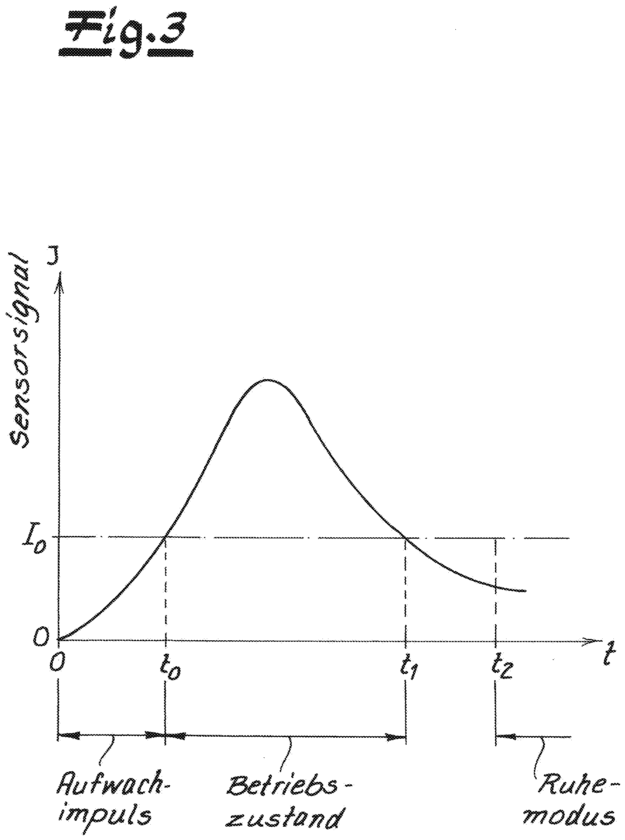

So oder so führt eine Bewegung der Kraftfahrzeug-Tür 1 bzw. ihres Türflügels 2 um die Achse 3 im Beispielfall dazu, dass die hiermit verbundene Linearbewegung des Permanentmagneten 7 einen elektrischen Strom in den Spulen 9 induziert, der entsprechend des Diagramms in der Fig. 3 zu einem Anwachsen des Sensorsignales bzw. Sensorstromes I ausgehend vom stromlosen Zustand (0) führt. Hierzu korrespondiert ein mithilfe des Sensors 5 erzeugter Aufwachimpuls. Dieser Aufwachimpuls bzw. Stromimpuls des Sensors 5 sorgt dafür, dass die Steuereinheit 6 aufgeweckt wird. Als Folge hiervon geht die Steuereinheit 6 vom stromlosen Ruhemodus in den Betriebszustand über.

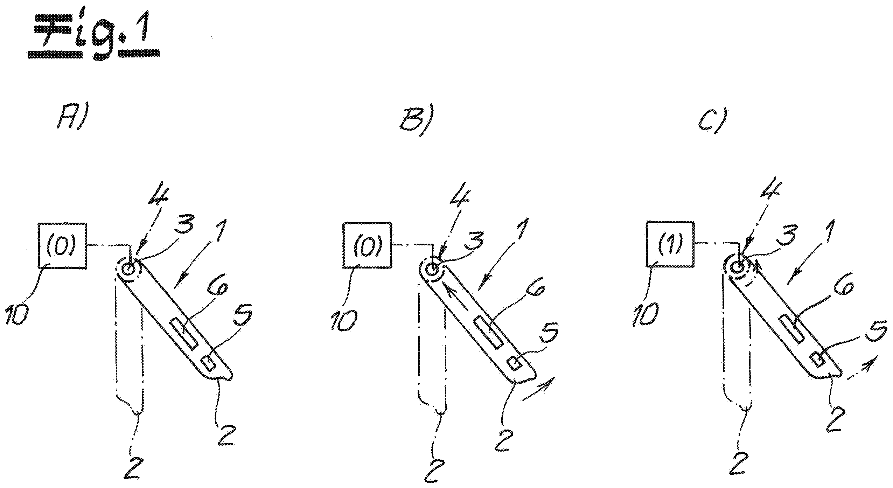

Um dies im Detail zu realisieren und umzusetzen, sorgt der fragliche und vom Sensor 5 durch die Bewegung der Kraftfahrzeug-Tür 1 erzeugte Stromimpuls bzw. Aufwachimpuls dafür, dass eine der Steuereinheit 6 zugeordnete Stromversorgungseinheit 10 aktiviert wird. Bei einem Vergleich der Fig. 1A-1C mit der Fig. 2 erkennt man, dass die Stromversorgungseinheit 10 karosserieseitig vorgesehen ist, wohingegen die Steuereinheit 6 und der Sensor 5 im Türflügel 2 der Kraftfahrzeug-Tür 1 angeordnet sind. Der Sensor 5 ist nun über eine Kommunikationsverbindung 11 mit der Stromversorgungseinheit 10 gekoppelt. Tatsächlich erkennt man anhand der Fig. 2, dass der Sensor 5 elektrisch durchgehend mit der Kommunikationsverbindung 11 verbunden ist, wohingegen die Kopplung des Sensors 5 mit der Steuereinheit 6 optional realisiert sein kann, was durch eine entsprechend gestrichelte Verbindung angedeutet ist.

Auf diese Weise sorgt der mithilfe des Sensors 5 bei einer Bewegung des Türflügels 2 und damit der Kraftfahrzeug-Tür 1 erzeugte Stromimpuls bzw. Aufwachimpuls dafür, dass zunächst die der Steuereinheit 6 zugeordnete Stromversorgungseinheit 10 aktiviert wird. Die auf diese Weise aktivierte Stromversorgungseinheit 10 überführt nun ihrerseits die Steuereinheit 6 vom Ruhemodus in dem Betriebszustand. Dazu ist die Stromversorgungseinheit 10 mit der Steuereinheit 6 gekoppelt, sodass bei einer aktivierten Stromversorgungseinheit 10 unmittelbar die Steuereinheit 6 von ihrem zuvor und im Ruhemodus eingenommenen stromlosen Zustand in den Betriebszustand übergeht. Gleiches mag für den Sensor 5 gelten.

Die in den Figuren wiedergegebene Kommunikationsverbindung 11 zwischen dem Sensor 5 und der Stromversorgungseinheit 10 kann sowohl drahtgebunden als auch drahtlos oder beides realisiert und umgesetzt werden. Dabei ist die Auslegung insgesamt so getroffen, dass im Ruhemodus lediglich die Kommunikationsverbindung 11 aktiv ist, um bei einer Bewegung der Kraftfahrzeug-Tür 1 den vom Sensor 5 erzeugten Stromimpuls bzw. Aufwachimpuls unmittelbar an die Stromversorgungseinheit 10 zu senden, die daraufhin aktiviert wird und ihrerseits im Anschluss hieran die Steuereinheit 6 vom Ruhemodus in dem Betriebszustand überführt. Demgegenüber sind im Ruhemodus sowohl der Sensor 5 als auch die Steuereinheit 6 und die Stromversorgungseinheit 10 insgesamt stromlos geschaltet.

In den Fig. 1A-1C sind nun die einzelnen Phasen beim Übergang vom Ruhemodus in den Betriebszustand dargestellt. In der Figur 1A ist der Ruhemodus der Kraftfahrzeug-Tür 1 bzw. des Türflügels 2 wiedergegeben. Die Stromversorgungseinheit 10 ist deaktiviert, was mit dem Zustand "0" einhergeht. Dieser Ruhemodus wird eingenommen, sobald das in der Figur 3 dargestellte Sensorsignal bzw. der vom Sensor 5 abgegebene Strom I unterhalb eines Schwellwertes I₀ liegt. Anstelle des Schwellwertes I₀ kann aber auch ein Schwellwertband ausgewertet werden. Gleichzeitig wird beim Unterschreiten des Schwellwertes I₀ seitens des Sensorsignales eine Zeitdauer registriert. Hierzu gehört der Anfangszeitpunkt t₁. Wenn nun über einen Zeitraum von t₁ bis t₂ das Sensorsignal dauerhaft unterhalb des angegebenen Schwellwertes I₀ in der Figur 3 liegt, gehen die Steuereinheit 6, der Sensor 5 und auch die Stromversorgungseinheit 10 in den Ruhemodus über. Hierzu gehört der Funktionszustand in der Figur 1A.

Wenn nun ausgehend hiervon die Kraftfahrzeug-Tür 1 bzw. deren Türflügel 2 bewegt wird, wie dies die Figur 1B andeutet, sorgt dies zunächst dafür, dass der Sensor 5 den zuvor bereits angesprochenen Stromimpuls bzw. Aufwachimpuls erzeugt. Hierzu korrespondiert ein in der Figur 3 angedeuteter Stromanstieg ausgehend vom stromlosen Zustand. Dabei mag der Aufwachimpuls zu einer Zeitdauer bis zum Zeitpunkt t₀ korrespondieren, wobei in diesem Fall wiederum der zuvor bereits angesprochene Schwellwert I₀ des Sensorsignals oder ein anderer Schwellwert überschritten werden mag und hierzu der Übergang vom zuvor eingenommenen Ruhemodus in den dann sich anschließenden Betriebszustand korrespondiert.

Jedenfalls sorgt dieser Aufwachimpuls bzw. Stromimpuls seitens des Sensors 5 dafür, dass beim Übergang von der Figur 1B zur Figur 1C die Stromversorgungseinheit 10 von ihrem zuvor eingenommenen deaktivierten Zustand (0) in den aktivierten Zustand (1) überführt wird. Die auf diese Weise aktivierte Stromversorgungseinheit 10 sorgt nun ihrerseits dafür, dass die Steuereinheit 6 vom Ruhemodus in den Betriebszustand übergeht bzw. überführt wird. Das hat zur Folge, dass mithilfe der Steuereinheit 6 dann auch der zuvor stromlose Aktuator 4 angesteuert wird und auch angesteuert werden kann, sodass als Folge hiervon der Türflügel 2 mithilfe des Aktuators 4 beaufschlagt wird. Selbstverständlich kann anstelle des Aktuators 4 auch jeder andere denkbare Stromverbraucher in oder an der Kraftfahrzeug-Tür 1 mithilfe der Steuereinheit 6 aktiviert werden, beispielsweise ein Kraftfahrzeug-Türschloss. Das ist jedoch nicht gezeigt. Anschließend kann die Steuereinheit 6 mit Hilfe des Sensors 5 die seitens des Aktuators 4 erzeugten Bewegungen des Türflügels 2 registrieren und den Aktuator 4 entsprechend ansteuern.

### Bezugszeichenliste

Kraftfahrzeugtür 1
Türflügel 2
Achse 3
Aktuator 4
Sensor, Induktionseinheit 5
Steuereinheit 6
Permanentmagnet 7
Federn 8
Spulen 9
Stromversorgungseinheit 10
Kommunikationsverbindung 11
Sensorsignal, Sensorstromes I
Zustand (0)

## Patentansprüche

1. Verfahren zum Betrieb einer Kraftfahrzeug-Tür (1), wonach die Kraftfahrzeug-Tür (1) beispielsweise mit einem Aktuator (4) und/oder einem Kraftfahrzeugtürschloss als Stromverbraucher sowie wenigstens einem Sensor (5) zur Erfassung von Türbewegungen ausgerüstet ist, und wonach eine Signale des Sensors (5) auswertende Steuereinheit (6) je nach registrierten Türbewegungen von einem Ruhemodus in einen Betriebszustand und zurück überführt wird,
**dadurch gekennzeichnet, dass**
der im Ruhemodus stromlose Sensor (5) durch die Türbewegung einen Stromimpuls erzeugt.

2. Verfahren nach Anspruch 1, **dadurch gekennzeichnet, dass** mithilfe des Stromimpulses des Sensors (5) die Steuereinheit (6) aufgeweckt wird und vom Ruhemodus in den Betriebszustand übergeht.

3. Verfahren nach Anspruch 1 oder 2, **dadurch gekennzeichnet, dass** der Stromimpuls eine der Steuereinheit (6) zugeordnete Stromversorgungseinheit (10) aktiviert.

4. Verfahren nach Anspruch 3, **dadurch gekennzeichnet, dass** die aktivierte Stromversorgungseinheit (10) die Steuereinheit (6) vom Ruhemodus in den Betriebszustand überführt.

5. Verfahren nach einem der Ansprüche 1 bis 4, **dadurch gekennzeichnet, dass** der Sensor (5) mit der Stromversorgungseinheit (10) über eine Kommunikationsverbindung (11) gekoppelt ist.

6. Verfahren nach Anspruch 5, **dadurch gekennzeichnet, dass** die Kommunikationsverbindung (11) drahtlos oder drahtgebunden arbeitet.

7. Verfahren nach einem der Ansprüche 5 oder 6, **dadurch gekennzeichnet, dass** im Ruhemodus lediglich die Kommunikationsverbindung (11) aktiv ist, während der Sensor (5), die Stromversorgungseinheit (10) und die Steuereinheit (6) sowie der Stromverbraucher jeweils stromlos sind.

8. Verfahren nach einem der Ansprüche 1 bis 7, **dadurch gekennzeichnet, dass** die Steuereinheit (6) und der Sensor (5) in einem Türflügel (2) der Kraftfahrzeug-Tür angeordnet sind.

9. Verfahren nach einem der Ansprüche 1 bis 8, **dadurch gekennzeichnet, dass** die Stromversorgungseinheit (10) karosserieseitig vorgesehen ist.

10. Verfahren nach einem der Ansprüche 1 bis 9, **dadurch gekennzeichnet, dass** der Sensor (5) als induktiv arbeitender Beschleunigungssensor ausgebildet ist und/oder eine Induktionseinheit (5) aufweist.

## Claims

1. Method for operating a motor vehicle door (1), according to which method the motor vehicle door (1) is equipped, for example, with an actuator (4) and/or a motor vehicle door latch in the form of a current consumer, and at least one sensor (5) for detecting door movements, and according to which a control unit (6) that evaluates signals from the sensor (5) is transferred from a rest mode into an operating state and back again according to the recorded door movements,
**characterized in that**
the door movement causes the sensor (5) that is de-energized in the rest mode to generate a current pulse.

2. Method according to claim 1, **characterized in that** the control unit (6) is woken up by means of the current pulse from the sensor (5), and transitions from the rest mode into the operating state.

3. Method according to either claim 1 or claim 2, **characterized in that** the current pulse activates a power supply unit (10) assigned to the control unit (6).

4. Method according to claim 3, **characterized in that** the activated power supply unit (10) transfers the control unit (6) from the rest mode into the operating state.

5. Method according to any of claims 1 to 4, **characterized in that** the sensor (5) is coupled to the power supply unit (10) via a communication link (11).

6. Method according to claim 5, **characterized in that** the communication link (11) operates wirelessly or by wire.

7. Method according to either claim 5 or claim 6, **characterized in that,** in the rest mode, only the communication link (11) is active, while the sensor (5), the power supply unit (10) and the control unit (6), as well as the current consumers, are in each case de-energized.

8. Method according to any of claims 1 to 7, **characterized in that** the control unit (6) and the sensor (5) are arranged in a door leaf (2) of the motor vehicle door.

9. Method according to any of claims 1 to 8, **characterized in that** the power supply unit (10) is provided on the vehicle body.

10. Method according to any of claims 1 to 9, **characterized in that** the sensor (5) is designed as an inductively operating acceleration sensor and/or has an induction unit (5).

## Revendications

1. Procédé permettant de faire fonctionner une porte de véhicule automobile (1), dans lequel la porte de véhicule automobile (1) est équipée par exemple d'un actionneur (4) et/ou d'une serrure de porte de véhicule automobile en tant que consommateur de courant ainsi que d'au moins un capteur (5) permettant de détecter des mouvements de porte, et dans lequel une unité de commande (6) évaluant des signaux du capteur (5) est passée d'un mode de veille à un état de fonctionnement et inversement, respectivement en fonction de mouvements de porte enregistrés,
**caractérisé en ce que**
le capteur (5) qui n'est pas alimenté en courant dans le mode de veille génère une impulsion de courant par le mouvement de porte.

2. Procédé selon la revendication 1, **caractérisé en ce que,** à l'aide de l'impulsion de courant du capteur (5), l'unité de commande (6) est réveillée et passe du mode de veille à l'état de fonctionnement.

3. Procédé selon la revendication 1 ou 2, **caractérisé en ce que** l'impulsion de courant active une unité d'alimentation en courant (10) associée à l'unité de commande (6).

4. Procédé selon la revendication 3, **caractérisé en ce que** l'unité d'alimentation en courant (10) activée fait passer l'unité de commande (6) du mode de veille à l'état de fonctionnement.

5. Procédé selon l'une des revendications 1 à 4, **caractérisé en ce que** le capteur (5) est couplé à l'unité d'alimentation en courant (10) par l'intermédiaire d'un moyen de connexion de communication (11).

6. Procédé selon la revendication 5, **caractérisé en ce que** le moyen de connexion de communication (11) fonctionne sans fil ou avec fil.

7. Procédé selon l'une des revendications 5 ou 6, **caractérisé en ce que,** dans le mode de veille, seul le moyen de connexion de communication (11) est actif, tandis que le capteur (5), l'unité d'alimentation en courant (10) et l'unité de commande (6) ainsi que le consommateur de courant ne sont respectivement pas alimentés en courant.

8. Procédé selon l'une des revendications 1 à 7, **caractérisé en ce que** l'unité de commande (6) et le capteur (5) sont disposés dans un vantail de porte (2) de la porte de véhicule automobile.

9. Procédé selon l'une des revendications 1 à 8, **caractérisé en ce que** l'unité d'alimentation en courant (10) est prévue côté carrosserie.

10. Procédé selon l'une des revendications 1 à 9, **caractérisé en ce que** le capteur (5) est conçu comme un capteur d'accélération fonctionnant par induction et/ou présente une unité d'induction (5).
